# EUROPEAN PATENT SPECIFICATION

(11) **EP 4 229 322 B1**
(45) Date of publication and mention of the grant of the patent: **21.02.2024**
(21) Application number: 21816424.2
(22) Date of filing: 22.11.2021
(51) Int. Cl.: F16L 33/24, F16L 33/22

(54) **HOSE CONNECTOR**
SCHLAUCHVERBINDER
RACCORD DE TUYAU

(30) Priority: 26.11.2020 WO PCT/EP2020/083532
(43) Date of publication of application: 23.08.2023
(73) Proprietor: Husqvarna AB, 56182 Huskvarna (SE)
(72) Inventor: KISTLER, Michael, 89185 Hüttisheim (DE)
(74) Representative: Finkele, Rolf
(86) International application number: PCT/EP2021/082514
(87) International publication number: WO 2022/112178

(56) References cited:
- EP-A2- 0 829 670
- US-A- 2 399 791
- US-A- 3 549 177

## Description

### TECHNICAL FIELD

The present disclosure relates to a hose connector for a hose.

### BACKGROUND

Generally, gardening requires a hose that is connected to a source of water supply, such as a tap or a pump, so that water can be delivered through the hose. A hose connector allows quick coupling of the hose with the source of water supply. For coupling the hose with the hose connector, the hose is pushed over a receptacle so that the hose is received by a body of the hose connector. In some situations, the hose is not received up to an appropriate length, or with proper reinforcement, within the hose connector. Conventionally, the receptacle of the hose connector includes a number of tooth shaped ribs disposed circumferentially thereon.

Further, mounting of the hose connector to the hose requires a defined force. A diameter of the receptacle is chosen such that the defined force is low and there is a good sealing between the hose and the hose connector. Typically, the diameter of the receptacle is different from a diameter of the hose. This difference in the diameters may create a flow constriction for water flowing therethrough. Further, a smaller diameter of the hose receptacle may also result in a decrease in a flow cross-section defined by the hose connector, which reduces a flow rate of water therethrough. Thus, there is a need for an improved hose connector which provides improved sealing between the hose and the hose connector, and also provides quick and easy coupling of the hose connector with the hose without any constriction or reduction in the flow cross-section.

An example is provided by U.S. patent application 2, 399, 791 (hereinafter referred to as the '791 reference). The '791 reference discloses a hose coupling. The hose coupling includes a connector and a clamping sleeve or shell. The connector has a head, having external threads on an inner end. An outer enlarged end of the head has a hexagonal shape. Further, the external threads end in a smooth transition. Thus, the water may leak from therein, and proper sealing may not be ensured. Therefore, an improved hose coupling arrangement is required.

### SUMMARY

In view of the above, it is an objective of the present disclosure to solve or at least reduce the drawbacks discussed above. The objective is at least partially achieved by a new design of a hose connector for a hose. The hose connector includes a body portion defining an outer thread section. The hose connector also includes an engagement portion defined with the body portion. The engagement portion allows the hose to be pushed on. The hose connector further includes one or more mating elements defined on at least a part of the engagement portion. The one or more mating elements allow engagement of the hose with the hose connector. The engagement portion comprises at least a first part and a second part. The first part is defined around an end of the engagement portion which is opposite to the body portion. The first part of the engagement portion comprises the one or more mating elements in form of a helix element which extends at least partially across the first part. Further a surface of the second part of the engagement portion does not exhibit any mating element and has an outer diameter at least equal to an outermost diameter of the helix element. The present invention is characterized in that the extension of the helix element over the first part stops abruptly such that the helix element defines a stepped end towards the second part having a planar end surface.

The present disclosure provides an improved hose connector having the helix element. This helix element provides ease in turning the hose onto the hose connector. Additionally, the helix element and a pressure generated between the hose and the hose connector together allow firm coupling between the hose and the hose connector. Further, an inner diameter of the engagement portion and a diameter of the hose are almost equal to each other. This feature ensures that the flow cross-section is not constricted, which results in constant flow rate of water through the hose connector and the hose. Moreover, the outer diameter of the second part of the engagement portion is substantially equal to or greater that an outermost diameter of the helix element. Further, as the extension of the helix element over the first part stops abruptly, this feature ensures a radial waterproof sealing, thus any water still flowing out of the engaged hose along the helix element will be stopped latest at this sealing. This is in contrast to the generation and application of helix structures with elements, such as windings with screws, as known from the state of the art forming the knowledge of the one skilled therein. In that case the transition of the helix structure will smoothly taper off into the planar end surface on an element and not at all stop abrupt which manufacturing wise is a difficult task. The disposition of first part around the end of the engagement portion reduces coupling efforts during coupling of the hose with the hose connector.

According to an embodiment of the present disclosure, a total length of the first part and the second part defines the full engagement portion. This arrangement provides easy and firm coupling of the hose by turning the hose onto the hose connector.

According to an embodiment of the present disclosure, an internal diameter of the engagement portion is about the inner diameter of a hose to be pushed on. This dimension of the internal diameter is approximately equal to an inner diameter of the hose which ensures a constant flow rate of water supply through the hose connector and the hose. In one exemplary embodiment, this could be **8.5** mm.

According to an embodiment of the present disclosure, the outer thread section allows a threaded connection of the hose connector with a clamping nut. The clamping nut provides firm and robust connection of the hose connector with the hose.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1** illustrates a perspective view of a hose connector, in accordance with the present disclosure;
**FIG. 2** illustrates a cross sectional view of the hose connector of **FIG. 1****,** coupled with a hose, in accordance with the present disclosure;
**FIG. 3A** illustrates a perspective view of an engagement portion of the hose connector as known in prior art; and
**FIG. 3B** illustrates a perspective view of an engagement portion of the hose connector, in accordance with the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. For example, one or more aspects of the present disclosure may be utilized in other embodiments and even other types of structures and/or methods. In the drawings, like numbers refer to like elements.

Certain terminology is used herein for convenience only and is not to be taken as a limitation on the disclosure. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

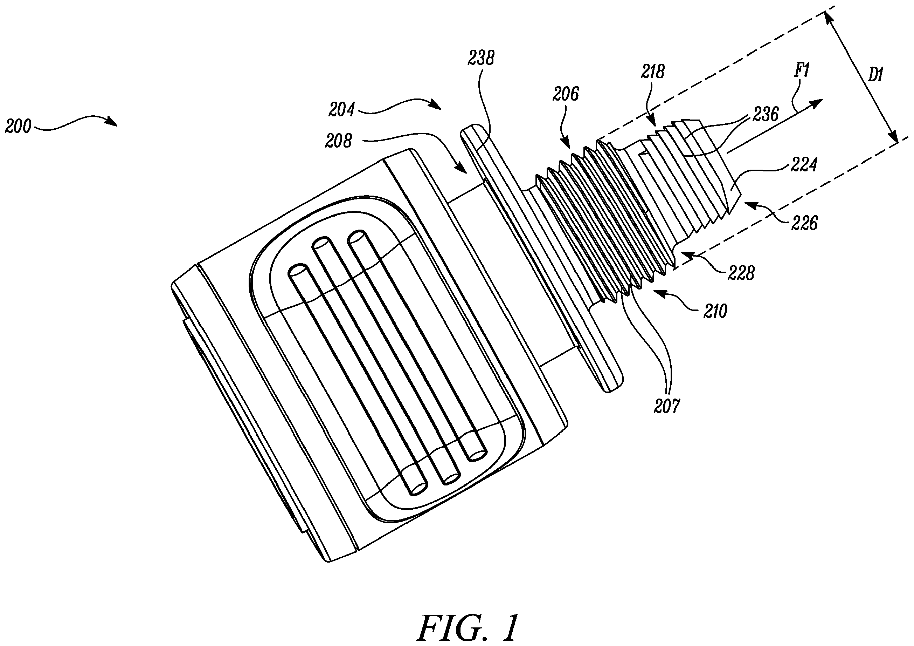

**FIG. 1** illustrates a hose connector **200** for a hose **202.** The hose **202** may be connected to a source of fluid supply (not shown) such as a pump, a tap, a pipe, and the like. Further, the fluid may be water or any other fluid of interest, as per requirements. **FIG. 1** illustrates a perspective view of the hose connector **200.** The hose connector **200** includes a body portion **204** defining an outer thread section **206.** The body portion **204** defines a first section **208** and a second section **210** disposed adjacent to the first section **208.** The second section **210** defines the outer thread section **206.** The outer thread section **206** includes a number of threads **207** that are circumferentially disposed on the second section **210** of the body portion **204.**

The second section **210** of the body portion **204** defines a first outer diameter "D**1**". Specifically, the first outer diameter "D**1**" is defined by the outer thread section **206.** The body portion **204** is a hollow piece usually made up of a Polyvinyl Chloride (PVC) or Acrylonitrile Butadiene Styrene (ABS) plastic. The body portion **204** may be made up of other materials, such as steel, brass, stainless steel, aluminum, plastic, and the like, without limiting the scope of present disclosure. Furthermore, a combination of materials can also be used to manufacture the body portion **204** of the hose connector **200.**

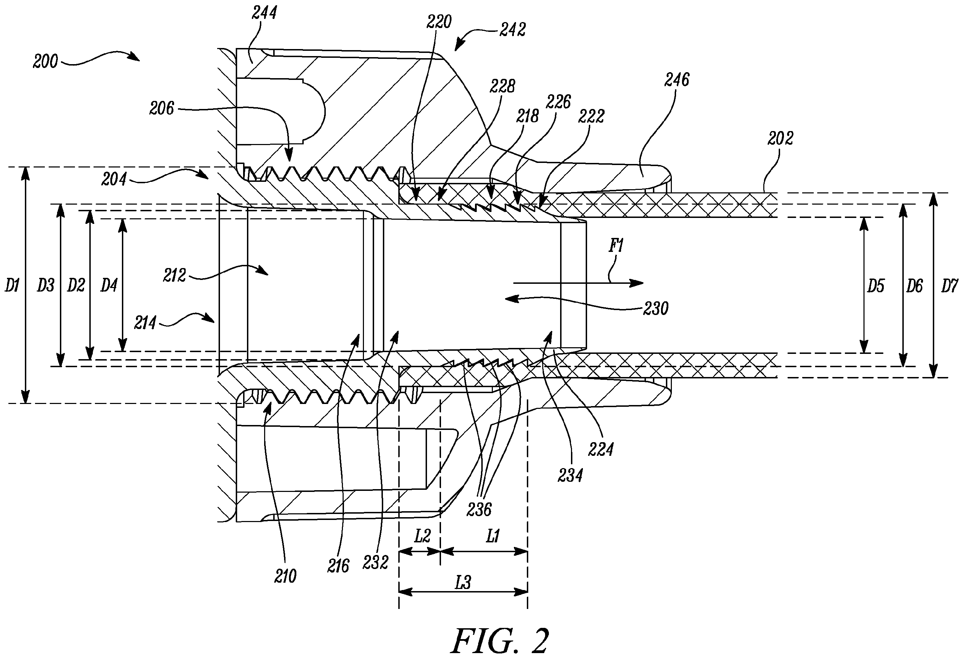

Referring to **FIG. 2****,** the body portion **204** also includes a first cylindrical hole **212.** The first cylindrical hole **212** defines a first inner diameter "D**2**". Fluids, such as water flows through the first cylindrical hole **212** of the body portion **204.** The first cylindrical hole **212** includes a first end portion **214** and a second end portion **216.** The first end portion **214** has a diverging cross-sectional area whereas the second end portion **216** has a converging cross-sectional area. The first and second end portions **214, 216** are disposed such that water flows from the first end portion **214** of the first cylindrical hole **212** towards the second end portion **216** of the first cylindrical hole **212.**

With combined reference to **FIG. 1** and **FIG. 2****,** the hose connector **200** also includes an engagement portion **218** defined with the body portion **204.** The engagement portion **218** allows the hose **202** to be pushed on. The engagement portion **218** is inserted into the hose **202** by turning and pushing the hose **202** onto the engagement portion **218.** In the illustrated example, the body portion **204** and the engagement portion **218** are embodied as a single piece unit. Alternatively, the body portion **204** and the engagement portion **218** may be embodied as separate parts that are joined together using techniques, such as welding, brazing, soldering, and the like. The engagement portion **218** is manufactured using the same material as that of the body portion **204.**

The engagement portion **218** is in fluid communication with the body portion **204** of the hose connector **200** and disposed downstream of the body portion **204** along a flow direction "F**1**" of the water. The flow direction "F**1**" as depicted is only exemplary and shall ease the understanding of the invention, while it is well understood that the flow direction could as well be in the opposite direction according to the usage. The engagement portion **218** is embodied as a generally cylindrical element. The engagement portion **218** includes a first end **220** proximate to the body portion **204** and a second end **222** opposite to the first end **220.** The second end **222** of the engagement portion **218** includes a taper portion **224.**

The engagement portion **218** includes at least a first part **226** and a second part **228.** More specifically, the engagement portion **218** includes the first part **226** proximate to the taper portion **224** (that is opposite to the body portion **204**) and the second part **228** proximate to the body portion **204.** Further, the first part **226** is defined around the end **222** of the engagement portion **218** which is opposite to the body portion **204.** In the illustrated example, the first part **226** is defined around the second end **222** of the engagement portion **218.** Further, the first part **226** may also be defined around the first end **220,** or anywhere else on the engagement portion **218,** in some embodiments.

The first part **226** of the engagement portion **218** defines a length "L**1**". Further, the second part **228** of the engagement portion **218** defines a diameter "D**3**" and a length "L**2**". Further, the diameter "D**3**" is lesser than the first outer diameter "D**1**". A total length "L**3**" of the first part **226** and the second part **228** defines the full engagement portion **218.** Specifically, the length "L**1**" and the length "L**2**" when combined define a full length "L**3**" of the engagement portion **218.**

Further, the engagement portion **218** defines an internal diameter "D**4**". Specifically, the engagement portion **218** includes a second cylindrical hole **230.** that defines the internal diameter "D**4**". The second cylindrical hole **230** is in fluid communication with the first cylindrical hole **212.** Fluids, such as water flows through the second cylindrical hole **230** of the engagement portion **218.** In the illustrated embodiment, the internal diameter "D**4**" of the engagement portion **218** is about **8.5** mm. However, the internal diameter "D**4**" may vary, as per application requirements. Further, as illustrated in the accompanying figures, when the hose **202** is connected to the hose connector **200,** the internal diameter "D**4**" is almost equal to an inner diameter "D**5**" of the hose **202.** This feature ensures that there is no flow constriction for the water passing therethrough. The second cylindrical hole **230** includes a first end portion **232** and a second end portion **234.** The first and second end portions **232, 234** are disposed such that water flows from the first end portion **232** of the second cylindrical hole **230** towards the second end portion **234** of the second cylindrical hole **230.**

The hose connector **200** further includes one or more mating elements **236** defined on at least a part of the engagement portion **218.** The one or more mating elements **236** allow engagement of the hose **202** with the hose connector **200.** The mating elements **236** are disposed circumferentially on the engagement portion **218** proximate to the taper portion **224.** More particularly, the mating elements **236** are defined on an outer surface of the engagement portion **218.**

The present disclosure illustrates the mating elements **236** defined on the length "L**1**" of the first part **226** of the engagement portion **218.** In some embodiments, the length "L**1**" of the first part **226** (i.e. the mating elements **236**) of the engagement portion **218** may cover the total length "L**3**" of the full engagement portion **218.** Further, a proportion of the length **"L1"** of the mating elements **236** with respect to the total length "L**3**" of the full engagement portion **218** may depend on various factors relating to the hose **202,** and the hose connector **200,** among other implementation factors. In some embodiments, the mating elements **236** may be defined discontinuously on the engagement portion **218.** Additionally, or alternatively, the mating elements **236** may be provided with any other mating features, such as a ramp, a pin, as known or used in the relevant art.

Further, the one or more mating elements **236** is a helix element **236** defined on the first part **226** of the engagement portion **218.** The mating elements **236** may be hereinafter interchangeably referred to as the helix element **236,** without limiting the scope of the present disclosure. In the illustrated example, the helix element **236** includes a continuous helix. Although the helix element **236** is provided on the first part **226,** it may be contemplated that the second part **228** may also include the helix element **236,** without any limitations. When the hose **202** is coupled with the hose connector **200,** the helix element **236** pinches the hose **202** thereby providing a firm coupling and efficient sealing between the hose **202** and the hose connector **200.**

The helix element **236** defines an outermost diameter "D**6**". Further, the second part **228** of the engagement portion **218** has the diameter "D**3**" that is at least equal to the outermost diameter "D**6**" of the helix element **236.** This feature ensures that a widened end of the hose **202** presses against the second part **228** which results in a radial waterproof sealing.

The hose connector **200** also includes a collar **238** disposed proximate to the body portion **204.** The collar **238** has a circular shape. The collar **238** may include any other shape such as square, triangular, elliptical, and the like. The hose connector **200** further includes a clamping nut **242.** The clamping nut **242** is tightened over the second section **210** of the body portion **204** after the connection of the hose connector **200** with the hose **202.** The clamping nut **242** engages with the body portion **204.** Further, the clamping nut **242** holds an engaged part of the hose **202** onto the engagement portion **218.** The clamping nut **242** includes a first element **244** and a second element **246.** The first element **244** defines an inner thread section (not shown) which engages with the outer thread section **206** of the body portion **204.** Thus, the outer thread section **206** allows a threaded connection of the hose connector **200** with the clamping nut **242.**

Further, the first element **244** of the clamping nut **242** is circular in shape. Alternatively, the first element **244** may include any cross section, such as triangular, hexagonal, square, and the like. Further, the second element **246** is a projected cylindrical part which has an internal diameter same as that of an outer diameter "D**7**" of the hose **202.** When the hose **202** is coupled with the hose connector **200,** a portion of the hose **202** is radially disposed between the second element **246** of the clamping nut **242** and the engagement portion **218.**

The present disclosure provides an improved hose connector **200** for the hose **202.** The hose connector **200** includes the helix element **236** that provides ease in turning the hose **202** onto the hose connector **200.** Further, the hose **202** gets widened as it is twisted onto the hose connector **200.** Additionally, the helix element **236** and a pressure generated between the hose **202** and the hose connector **200** hold the hose **202** firmly. Further, the helix element **236** engages with the hose **202** such that an accidental release of the hose **202** from the hose connector **200** may be prevented. Moreover, the diameter "D**3**" of the second part **228** of the engagement portion **218** is at least equal to the outermost diameter "D**6**" of the helix element **236** which results in a radial waterproof sealing.

The hose connector **200** defined herein does not include any sharp changes in cross-section across the hose connector **200** thereby eliminating any flow constrictions through the hose connector **200.** Moreover, as the internal diameter "D**4**" of the engagement portion **218** and the inner diameter "D**5**" of the hose **202** are almost equal, the flow cross-section is not constricted which results in constant flow rate of water towards the hose **202.**

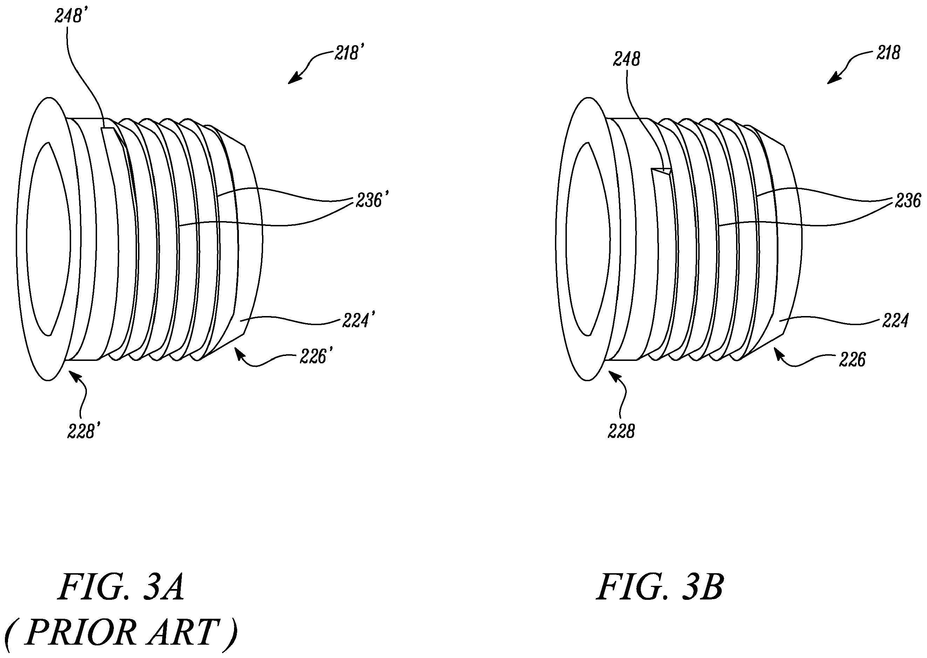

**FIG. 3A** and **3B** illustrate the engagement portion **218** in further detail. Specifically, **FIG. 3A** illustrates an engagement portion **218'** as known in prior art. The engagement portion **218'** includes a taper portion **224'.** The engagement portion **218'** includes a first part **226'** and a second part **228'.** The first part **226'** is defined around an end of the engagement portion **218'** which is opposite to a body portion. The first part **226** includes one or more mating elements **236'** in form of a helix element **236'** extending at least partially across the first part **226'.** As illustrated, the helix element **236'** is in form of threads on a surface **248'** which allows mounting of a hose with the hose connector. The threads end on the surface **248'** in a manner that a smooth ending transition is provided with the surface **248'.** Typically, threads are provided in this manner in any such coupling mechanism. This results in improper sealing or flow profile of the water while flowing through the hose.

**FIG. 3B** illustrates the engagement portion **218** in further details as per present disclosure. The engagement portion **218** includes the first part **226** and the second part **228.** The first part **226** is defined around the end **222** of the engagement portion **218** which is opposite to the body portion **204.** The first part **226** includes the one or more mating elements **236** in form of the helix element **236** extending at least partially across the first part **226.** Further, the extension of the helix element **236** over the first part **226** stops abruptly such that the helix element **236** defines a stepped end towards the second part **228** having a planar end surface **248.** The planar end surface **248** is illustrated as having a triangular cross-sectional shape. It should be understood that the planar end surface **248** may have any other cross-sectional shape as well based on the structural profile of the threads.

The stepped end, and hence, the abrupt ending provides for an efficient sealing for water flowing inside the hose **202.** Water flowing inside the hose **202** may radially flow along the threads and may also tend to flow further beyond the threads. However, due to the planar end surface **248** and the abrupt ending of the thread, proper sealing of the hose **202** is ensured, and there is no leakage of water therefrom.

In the drawings and specification, there have been disclosed preferred embodiments and examples of the disclosure and, although specific terms are employed, they are used in a generic and descriptive sense only and not for the purpose of limitation of the scope of the invention being set forth in the following claims.

### LIST OF ELEMENTS

- **200**: Hose Connector
- **202**: Hose
- **204**: Body Portion
- **206**: Outer Thread Section
- **207**: Threads
- **208**: First Section
- **210**: Second Section
- **212**: First Cylindrical Hole
- **214**: First End Portion
- **216**: Second End Portion
- **218**: Engagement Portion
- **220**: First End
- **222**: Second End
- **224**: Taper Portion
- **226**: First Part
- **228**: Second Part
- **230**: Second Cylindrical Hole
- **232**: First End Portion
- **234**: Second End Portion
- **236**: Mating Element/Helix Element
- **238**: Collar
- **242**: Clamping Nut
- **244**: First Element
- **246**: Second Element
- **248**: End surface
- **218'**: Engagement portion
- **224'**: Taper Portion
- **226'**: First part
- **228'**: Second part
- **236'**: Mating Element/Helix Element
- **248'**: Surface
- L**1**: Length of First Part
- L**2**: Length of Second Part
- L**3**: Total Length
- F**1**: Flow Direction of Water
- D**1**: First Outer Diameter
- D**2**: First Inner Diameter
- D**3**: Diameter of Second Part
- D**4**: Internal Diameter of Second Cylindrical Hole
- D**5**: Inner Diameter of Hose
- D**6**: Outermost Diameter of Helix Element
- D**7**: Outer Diameter of Hose

## Claims

1. A hose connector **(200)** for a hose **(202),** comprising:
a body portion **(204)** defining an outer thread section **(206);**
an engagement portion **(218)** defined with the body portion **(204),** wherein the engagement portion **(218)** is adapted to allow the hose **(202)** to be pushed on;
one or more mating elements **(236)** defined on at least a part of the engagement portion **(218),** wherein the one or more mating elements **(236)** are adapted to allow engagement of the hose **(202)** with the hose connector **(200);**
the engagement portion **(218)** comprises at least a first part (226) and a second part (228),
wherein the first part **(226)** is defined around an end **(222)** of the engagement portion **(218)** which is opposite to the body portion **(204),** and comprises the one or more mating elements **(236)** in form of a helix element **(236)** extending at least partially across the first part (226),
and wherein a surface of the second part **(228)** of the engagement portion **(218)** does not exhibit any mating element and has an outer diameter at least equal to an outermost diameter **(D6)** of the helix element **(236);**
**characterized in that:**
the extension of the helix element (236) over the first part (226) stops abruptly such that the helix element (236) defines a stepped end towards the second part (228) having a planar end surface.

2. The hose connector **(200)** of claim 1, wherein a total length **(L3)** of the first part **(226)** and the second part **(228)** defines the full engagement portion **(218).**

3. The hose connector **(200)** of claim 1, wherein the engagement portion **(218)** is configured such that an internal diameter **(D4)** of the engagement portion **(218)** is about the inner diameter of a hose to be pushed on.

4. The hose connector **(200)** of claim 3, wherein an internal diameter **(D4)** of the engagement portion **(218)** is about 8.5 mm.

5. The hose connector **(200)** of claim 1, wherein the outer thread section **(206)** is configured to allow a threaded connection of the hose connector **(200)** with a clamping nut **(242).**

## Patentansprüche

1. Schlauchverbinder **(200)** für einen Schlauch **(202),** umfassend:
einen Körperabschnitt **(204),** der einen Außengewindeabschnitt **(206)** definiert;
einen Eingriffsabschnitt **(218),** der mit dem Körperabschnitt **(204)** definiert ist, wobei der Eingriffsabschnitt **(218)** angepasst ist, um zu ermöglichen, dass auf den Schlauch **(202)** gedrückt wird;
ein oder mehrere Paarungselemente **(236),** die an mindestens einem Teil des Eingriffsabschnitts **(218)** definiert sind, wobei das eine oder die mehreren Paarungselemente **(236)** angepasst sind, um einen Eingriff des Schlauchs **(202)** mit dem Schlauchverbinder **(200)** zu ermöglichen;
wobei der Eingriffsabschnitt **(218)** mindestens einen ersten Teil (226) und einen zweiten Teil (228) umfasst,
wobei der erste Teil **(226)** um ein Ende **(222)** des Eingriffsabschnitts **(218),** der dem Körperabschnitt **(204)** gegenüberliegt, herum definiert ist und das eine oder die mehreren Paarungselemente **(236)** in Form eines Helixelements **(236),** das sich mindestens teilweise über den ersten Teil (226) erstreckt, umfasst,
und wobei eine Oberfläche des zweiten Teils **(228)** des Eingriffsabschnitts **(218)** kein Paarungselement besitzt und einen Außendurchmesser mindestens gleich einem äußersten Durchmesser **(D6)** des Helixelements **(236)** aufweist;
**dadurch gekennzeichnet, dass:**
die Erweiterung des Helixelements (236) über den ersten Teil (226) abrupt derart stoppt, dass das Helixelement (236) ein abgestuftes Ende in Richtung des zweiten Teils (228), der eine ebene Endoberfläche aufweist, definiert.

2. Schlauchverbinder **(200)** nach Anspruch 1, wobei eine Gesamtlänge **(L3)** des ersten Teils **(226)** und des zweiten Teils **(228)** den vollständigen Eingriffsabschnitt **(218)** definiert.

3. Schlauchverbinder **(200)** nach Anspruch 1, wobei der Eingriffsabschnitt **(218)** derart konfiguriert ist, dass ein Innendurchmesser **(D4)** des Eingriffsabschnitts **(218)** etwa den Innendurchmesser eines Schlauchs, auf den gedrückt werden soll, beträgt.

4. Schlauchverbinder **(200)** nach Anspruch 3, wobei ein Innendurchmesser **(D4)** des Eingriffsabschnitts **(218)** etwa 8,5 mm beträgt.

5. Schlauchverbinder **(200)** nach Anspruch 1, wobei der Außengewindeabschnitt **(206)** konfiguriert ist, um eine Gewindeverbindung des Schlauchverbinders **(200)** mit einer Spannmutter **(242)** zu ermöglichen.

## Revendications

1. Raccord de tuyau **(200)** pour un tuyau **(202),** comprenant :
une partie de corps **(204)** définissant une section de filetage externe **(206** ) ;
une partie de mise en prise **(218)** définie avec la partie de corps (204), dans lequel la partie de mise en prise **(218)** est adaptée pour permettre au tuyau **(202)** d'être enfoncé ;
un ou plusieurs éléments d'accouplement **(236)** définie sur au moins un élément de la partie de mise en prise **(218),** dans lequel l'élément ou les éléments d'accouplement **(236)** sont adaptés pour permettre une mise en prise du tuyau **(202)** avec le raccord de tuyau **(200)** ;
la partie de mise en prise **(218)** comprend au moins une première partie (226) et une seconde partie (228),
dans lequel la première partie **(226)** est définie autour d'une extrémité **(222)** de la partie de mise en prise **(218)** qui est opposée à la partie de corps **(204)** et comprend l'élément ou les éléments d'accouplement **(236)** sous forme d'un élément en hélice **(236)** s'étendant au moins partiellement à travers la première partie (226),
et dans lequel une surface de la seconde partie **(228)** de la partie de mise en prise **(218)** ne présente aucun élément d'accouplement et possède un diamètre externe au moins égal à un diamètre le plus externe **(D6)** de l'élément en hélice **(236)** ;
**caractérisé en ce que** :
l'extension de l'élément en hélice (236) sur la première partie (226) s'arrête brusquement de telle sorte que l'élément en hélice (236) définit une extrémité étagée vers la seconde partie (228) possédant une surface d'extrémité plane.

2. Raccord de tuyau **(200)selon** la revendication 1, dans lequel une longueur totale **(L3)** de la première partie **(226)** et de la seconde partie **(228)** définit la partie de mise en prise complète **(218).**

3. Raccord de tuyau **(200)** selon la revendication 1, dans lequel la partie de mise en prise **(218)** est conçue de telle sorte qu'un diamètre interne **(D4)** de la partie de mise en prise **(218)** est à peu près le diamètre intérieur d'un tuyau à enfoncer.

4. Raccord de tuyau **(200)** selon la revendication 3, dans lequel un diamètre interne **(D4)** de la partie de mise en prise **(218)** est d'environ 8,5 mm.

5. Raccord de tuyau **(200)** selon la revendication 1, dans lequel la section de filetage externe **(206)** est conçu pour permettre un raccordement fileté du raccord de tuyau **(200)** avec un écrou de serrage **(242).**
